# EUROPEAN PATENT APPLICATION

(11) **EP 4 840 722 A1**
(43) Date of publication of application: **18.11.2026**
(21) Application number: 24917087.9
(22) Date of filing: 26.07.2024
(51) Int. Cl.: B62D 3/12, F16H 19/04, F16H 55/26

(54) **STEERING DEVICE**

(30) Priority: 10.01.2024 JP 2024001683
(71) Applicant: NSK Steering & Control, Inc., Tokyo, 141-0032 (JP)
(72) Inventor: IWASAKI, Yasuhiro, Maebashi-shi, Gunma 371-8527 (JP); WATANABE, Yasushi, Maebashi-shi, Gunma 371-8528 (JP); KOBAYASHI, Tatsuya, Maebashi-shi, Gunma 371-8528 (JP); HARUNAGA, Masahiro, Maebashi-shi, Gunma 371-8527 (JP)
(74) Representative: SSM Sandmair
(86) International application number: PCT/JP2024/026747
(87) International publication number: WO 2025/150212

(57) **Abstract**

A steering device 1 includes: a pinion gear 31 including a helical gear; and a rack bar 40 including a plurality of rack teeth 41 having a helical shape, which mesh with the pinion gear 31. The rack teeth 41 include: a wide-pitch portion 46 in which a plurality of the rack teeth 41 are arranged at a predetermined pitch; and a narrow-pitch portion 45 in which a pitch between a plurality of the rack teeth 41 is narrower than the pitch between the rack teeth 41 located in the wide-pitch portion 46. Each of the rack teeth 41 located in the wide-pitch portion 46 has a constant tooth thickness in a tooth width direction W. Each of the rack teeth 41 located in the narrow-pitch portion 45 includes, on one surface in a tooth thickness direction T, a tooth thickness changing portion 42 in which a tooth thickness of an end in the tooth width direction W is smaller than a tooth thickness at a center in the tooth width direction W. The steering device 1 can thereby reduce variation in steering resistance during steering without decreasing the rigidity of the rack bar 40.

## Description

### Field

The present disclosure relates to a steering device.

### Background

A steering device includes a pinion gear and a rack bar. The pinion gear is rotated by rotational torque of a steering wheel during steering. The rack bar includes rack teeth that mesh with the pinion gear. The steering device having such configuration can change the orientation of a steered wheel in accordance with a steering angle of the steering wheel by transmitting, from the pinion gear to the rack bar, rotational torque input from the steering wheel and by linearly moving the rack bar. Furthermore, some conventional steering devices include a so-called variable gear ratio mechanism in which the pitch between rack teeth provided on a rack bar varies depending on the position in a longitudinal direction of the rack bar.

For example, in the steering device described in Patent Literature 1, a meshing portion including a plurality of rack teeth in a rack shaft includes a narrow-pitch portion and a wide-pitch portion, which have different pitches between the plurality of rack teeth. Furthermore, the steering device described in Patent Literature 1 including the narrow-pitch portion and the wide-pitch portion as described above includes a rack bush that supports the rack shaft. The steering device reduces variation in steering reaction force caused by changes in a steering angle, by reducing the sliding resistance between the rack shaft and the rack bush at the time when a pinion-teeth portion meshes with the narrow-pitch portion compared to sliding resistance at the time when the pinion-teeth portion meshes with the wide-pitch portion.

### Citation List

### Patent Literature

Patent Literature 1: JP 2017-136905 A

### Summary

### Technical Problem

In Patent Literature 1, the diameter of the rack shaft is changed in order to change the sliding resistance between the rack shaft and the rack bush. That is, in the rack shaft, a portion that comes in slide contact with the rack bush at the time when the pinion-teeth portion meshes with the narrow-pitch portion is set as a small-diameter portion. A portion that comes in slide contact with the rack bush at the time when the pinion-teeth portion meshes with the wide-pitch portion is set as a large-diameter portion. Thus, when the pinion-teeth portion meshes with the narrow-pitch portion, the small-diameter portion comes in slide contact with the rack bush. This can reduce sliding resistance as compared with that in a case where the large-diameter portion comes in slide contact with the rack bush at the time when the pinion-teeth portion meshes with the wide-pitch portion.

When the rack bar has a small diameter, however, the rack bar has a decreased support rigidity. This may decrease rigidity during steering and decrease steering feel. Thus, a steering device including a rack bar having a plurality of pitches between a plurality of rack teeth has had room for improvement in view of ensuring the rigidity of the rack bar in suppressing variation in steering resistance. The steering resistance is resistance to steering such as sliding resistance, and varies with variation in the pitch.

The present disclosure has been made in view of the above, and an object thereof is to provide a steering device capable of reducing variation in steering resistance during steering without decreasing the rigidity of a rack bar.

### Solution to Problem

A steering device according to the present disclosure includes: a pinion gear including a helical gear; and a rack bar including a plurality of rack teeth having a helical shape, which mesh with the pinion gear. The rack teeth include: a wide-pitch portion in which a plurality of the rack teeth are arranged at a predetermined pitch; and a narrow-pitch portion in which a pitch between a plurality of the rack teeth is narrower than the pitch between the rack teeth located in the wide-pitch portion. Each of the rack teeth located in the wide-pitch portion has a constant tooth thickness in a tooth width direction. Each of the rack teeth located in the narrow-pitch portion includes, on one surface in a tooth thickness direction, a tooth thickness changing portion in which a tooth thickness of an end in the tooth width direction is smaller than a tooth thickness at a center in the tooth width direction.

According to the configuration, the rack teeth located in the narrow-pitch portion include tooth thickness changing portions 42. As a result, when the rotating pinion gear comes into contact with the rack teeth located in the narrow-pitch portion, the contact can be made difficult in the vicinity of each end in a tooth width direction of the rack teeth. Thus, the rack teeth located in the narrow-pitch portion can cause the ease of contact with the pinion gear due to the narrow pitch and the difficulty of contact with the pinion gear in the vicinity of each end in the tooth width direction of the rack teeth to offset each other. Therefore, the difference between the maximum number and the minimum number of the rack teeth that simultaneously come into contact with the pinion gear can be reduced. The variation in steering resistance during steering can be reduced without changing the sliding resistance between the rack bar and a rack bush by partially reducing the diameter of the rack bar. As a result, variation in steering resistance during steering can be reduced without decreasing the rigidity of the rack bar.

The steering device according to the present disclosure includes: a pinion gear including a helical gear; and a rack bar including a plurality of rack teeth having a helical shape, which mesh with the pinion gear. The rack teeth include: a wide-pitch portion in which a plurality of the rack teeth are arranged at a predetermined pitch; and a narrow-pitch portion in which a pitch between a plurality of the rack teeth is narrower than the pitch between the rack teeth located in the wide-pitch portion. Each of the rack teeth located in the wide-pitch portion includes, on one surface in a tooth thickness direction, a tooth thickness changing portion in which a tooth thickness of an end in the tooth width direction is smaller than a tooth thickness at a center in the tooth width direction. Each of the rack teeth located in the narrow-pitch portion includes, on respective surfaces on both sides in the tooth thickness direction, the tooth thickness changing portion.

According to the configuration, a tooth thickness changing portion is formed on one surface of a rack tooth located in the wide-pitch portion, and tooth thickness changing portions are formed on both surfaces of a rack tooth located in the narrow-pitch portion, thereby reducing the difference between the maximum number and the minimum number of the rack teeth that simultaneously come into contact with the pinion gear. Thus, variation in steering resistance during steering can be reduced without changing the sliding resistance between the rack bar and a rack bush by partially reducing the diameter of the rack bar. As a result, variation in steering resistance during steering can be reduced without decreasing the rigidity of the rack bar 40.

As a preferred aspect, the tooth thickness changing portion is provided with crowning in which a tooth thickness is maximized at the center in the tooth width direction and is reduced toward the end in the tooth width direction.

According to the configuration, the tooth thickness changing portion is provided with crowning. As a result, when the rotating pinion gear comes into contact with the rack teeth located in the narrow-pitch portion, the contact can be made difficult in the vicinity of each end in the tooth width direction. Thus, the rack teeth located in the narrow-pitch portion can cause the ease of contact with the pinion gear due to the narrow pitch and the difficulty of contact with the pinion gear in the vicinity of each end in the tooth width direction of the rack teeth provided with crowning to offset each other. Therefore, the difference between the maximum number and the minimum number of the rack teeth that simultaneously come into contact with the pinion gear can be reduced, and variation in steering resistance during steering can be reduced. As a result, variation in steering resistance during steering can be reduced without decreasing the rigidity of the rack bar.

As a preferred aspect, the narrow-pitch portions are respectively arranged at a center and both ends of a region in which the rack teeth are arranged in a longitudinal direction of the rack bar, and the wide-pitch portions are respectively arranged between the narrow-pitch portion at the center and the narrow-pitch portions at both ends in the longitudinal direction of the rack bar.

According to the configuration, the narrow-pitch portions are arranged at the center and both the ends of a region in which the rack teeth are arranged. Thus, steering feel in or near straight-line traveling is ensured by the narrow-pitch portion at the center, and the stress of the rack teeth when the steering angle is at or near the maximum is reduced by the narrow-pitch portions at both ends. Thus, durability can be ensured. Furthermore, the wide-pitch portions are respectively arranged between the narrow-pitch portion at the center and the narrow-pitch portions at both ends in the longitudinal direction of the rack bar. Thus, responsiveness to steering at a steering angle between the steering angle in straight-line traveling and the maximum steering angle can be enhanced in the wide-pitch portions, and steering feel can be ensured during steering at a steering angle larger than that in the straight-line traveling. As a result, both the steering feel during vehicle traveling and the durability of the rack bar can be improved.

As a preferred aspect, the narrow-pitch portion is arranged at a center in a region in which a plurality of the rack teeth are arranged in a longitudinal direction of the rack bar, and the wide-pitch portions are arranged at both sides of the narrow-pitch portion in the longitudinal direction of the rack bar.

According to the configuration, the narrow-pitch portion is arranged at the center in the region in which the rack teeth are arranged, and the wide-pitch portions are arranged on the sides of both ends of the narrow-pitch portion, which can enhance responsiveness in steering at a large steering angle. As a result, the steering feel can be improved.

As a preferred aspect, the number of the rack teeth that simultaneously come into contact with the pinion gear falls within a range of two to four.

According to the configuration, two or more rack teeth simultaneously come into contact with the pinion gear, which can reduce impact noise and improve the steering feel. Furthermore, four or fewer rack teeth simultaneously come into contact with the pinion gear, which can reduce the difference between the maximum number and the minimum number of the rack teeth that simultaneously come into contact with the pinion gear. Therefore, variation in steering resistance during steering can be reduced. As a result, impact noise can be reduced while reducing variation in steering resistance during steering, and the steering feel can be improved. Advantageous Effects of Invention

The steering device according to the present disclosure exhibits an effect of reducing variation in steering resistance during steering without decreasing the rigidity of a rack bar.

### Brief Description of Drawings

FIG. 1 is a schematic view of a steering device according to an embodiment.
FIG. 2 is a front view of a plurality of rack teeth of a rack bar in FIG. 1.
FIG. 3 is a detailed view of a rack tooth arranged in a wide-pitch portion in FIG. 2.
FIG. 4 is a detailed view of a rack tooth arranged in a narrow-pitch portion in FIG. 2.
FIG. 5 is an explanatory diagram illustrating the transition of the number of the rack teeth of the rack bar that simultaneously come into contact with a rotating pinion gear when each of the rack teeth is provided with no crowning.
FIG. 6 is an explanatory diagram illustrating the transition of the number of the rack teeth the rack bar that simultaneously come into contact with the rotating pinion gear when each of the rack teeth is provided with crowning on both surfaces thereof.
FIG. 7 is an explanatory diagram illustrating the transition of the number of the rack teeth of the rack bar, located in the narrow-pitch portion, that simultaneously come into contact with the rotating pinion gear when each of the rack teeth is provided with crowning on one surface thereof.
FIG. 8 is an explanatory diagram illustrating a state in which two rack teeth are in contact with a gear of the pinion gear.
FIG. 9 is a schematic view illustrating a modification of the steering device according to the embodiment, in which the narrow-pitch portion is arranged at the center in the rack teeth arrangement region.
FIG. 10 is an explanatory diagram illustrating a modification of the steering device according to the embodiment, in which the tooth thickness changing portion is formed on one surface of the rack tooth arranged in the wide-pitch portion.
FIG. 11 is an explanatory diagram illustrating a modification of the steering device according to the embodiment, in which tooth thickness changing portions are respectively formed on both surfaces of the rack tooth arranged in the narrow-pitch portion.

### Description of Embodiments

The present disclosure will be described in detail below with reference to the drawings. Note that the present disclosure is not limited by the following embodiment for carrying out the invention (hereinafter, referred to as embodiment). Furthermore, components in the following embodiment include those that can be easily assumed by those skilled in the art, those that are substantially the same, and those in a so-called equivalent range. Moreover, the components disclosed in the following embodiment can be appropriately combined.

### (Embodiment)

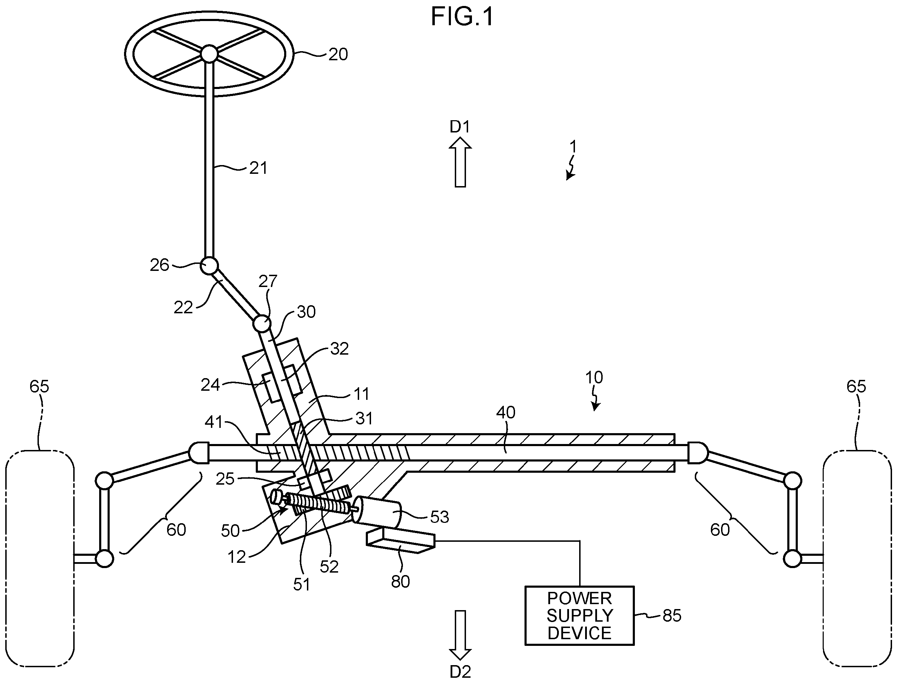

FIG. 1 is a schematic view of a steering device 1 according to the embodiment. Note that, in the figure, D1 represents an upper side (one side in an axial direction), and D2 represents a lower side (other side in the axial direction). Furthermore, in describing the embodiment, the upper side (one side in the axial direction) may be referred to as a D1 side, and the lower side (other side in the axial direction) may be referred to as a D2 side.

As illustrated in FIG. 1, the steering device 1 includes a steering wheel 20, a first steering shaft 21, a second steering shaft 22, a pinion shaft 30, a rack bar 40, a worm gear reducer 50, tie rods 60, a rack housing 10, an ECU 80, and a power supply device 85.

The first steering shaft 21 is coupled with the steering wheel 20. The first steering shaft 21 is rotatably supported. The first steering shaft 21 is rotated by the torque generated when the steering wheel 20 is operated. Specifically, when a driver grips and rotates the steering wheel 20, the rotational torque (steering torque) is transmitted to the first steering shaft 21 to rotate the first steering shaft 21.

The second steering shaft 22 is coupled with the first steering shaft 21 via a first universal joint 26. The second steering shaft 22 is rotatably supported. The rotational torque of the first steering shaft 21 is transmitted to the second steering shaft 22 via the first universal joint 26 to rotate the second steering shaft 22.

The rack housing 10 has a cylindrical shape. Furthermore, the rack housing 10 is provided with a pinion housing 11 and a gear reducer housing 12.

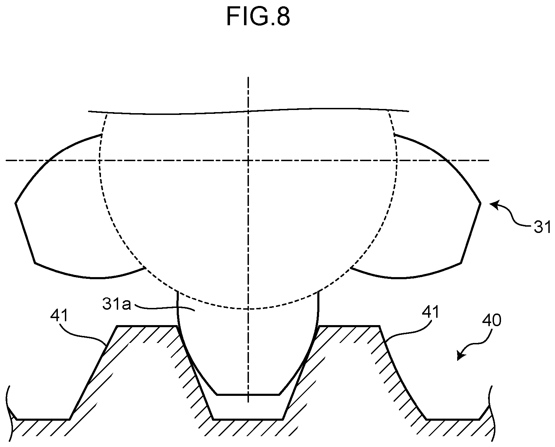

As illustrated in FIG. 1, the pinion shaft 30 is coupled with the second steering shaft 22 via a second universal joint 27. The rotational torque of the second steering shaft 22 is transmitted to the pinion shaft 30 via the second universal joint 27 to rotate the pinion shaft 30. The pinion shaft 30 is provided with a pinion gear 31. The pinion gear 31 includes a helical gear 31a (see FIG. 8). That is to say, the pinion gear 31 is a so-called helical gear. The pinion shaft 30 is rotatably supported by the pinion housing 11 via a first bearing 24 and a second bearing 25. The first bearing 24 supports an upper portion of the pinion shaft 30. The second bearing 25 supports a lower portion of the pinion shaft 30. Specifically, the first bearing 24 is provided on a cylindrical surface 32 on the upper side (D1 side, one side in the axial direction) of the pinion gear 31.

The rack bar 40 is housed inside the rack housing 10. The rack bar 40 has a shaft shape extending in a predetermined direction and is disposed such that a longitudinal direction thereof corresponds to a vehicle width direction of a vehicle. The rack bar 40 includes a plurality of rack teeth 41 on a surface at a predetermined position in the longitudinal direction of the rack bar 40. The plurality of rack teeth 41 each have a helical shape and are formed so as to be arranged in the longitudinal direction of the rack bar 40. The plurality of rack teeth 41 meshes with the pinion gear 31 of the pinion shaft 30.

The tie rods 60 are respectively arranged on both sides in the longitudinal direction of the rack bar 40 and are coupled to the rack bar 40. Furthermore, each of the tie rods 60 has a first portion coupled to the rack bar 40 and a second portion opposite to the first portion and coupled to wheels 65. Therefore, when the pinion shaft 30 rotates, force in the longitudinal direction of the rack bar 40 is transmitted to the rack teeth 41 that mesh with the pinion gear 31. Thus, the rack bar 40 moves in the longitudinal direction, that is to say, the rack bar 40 moves in the vehicle width direction. This causes the tie rods 60 to move in the vehicle width direction and changes the orientations of the wheels 65, whereby a traveling direction of the vehicle is changed.

The rack housing 10 has a cylindrical shape and is disposed such that the axial direction of the cylindrical shape is along the longitudinal direction of the rack bar 40. The rack housing 10 having such a cylindrical shape internally accommodates the rack bar 40. The pinion housing 11 and the gear reducer housing 12 are arranged integrally with the rack housing 10.

The worm gear reducer 50 includes a worm shaft 52 and a worm wheel 51. The worm shaft 52 and the worm wheel 51 are housed inside the gear reducer housing 12. The worm shaft 52 is provided on an output shaft of an electric motor 53. The worm shaft 52 meshes with the worm wheel 51. The worm wheel 51 is fixed to a lower end of the pinion shaft 30. Therefore, when the electric motor 53 is activated, the worm shaft 52 rotates, and the worm wheel 51 that meshes with the worm shaft 52 rotates with the pinion shaft 30. This enables the electric motor 53 to impart auxiliary steering torque to the pinion shaft 30, and can reduce force required to operate the steering wheel 20.

The ECU 80 is connected with the power supply device 85 (e.g., in-vehicle battery). Power is supplied from the power supply device 85 to the ECU 80. The ECU 80 controls the operation of the electric motor 53. The ECU 80 acquires signals from a torque sensor (not illustrated) and a vehicle speed sensor (not illustrated). The ECU 80 calculates an auxiliary steering command value based on steering torque and a vehicle speed. The ECU 80 adjusts a value of power to be supplied to the electric motor 53 based on the auxiliary steering command value. The ECU 80 acquires information on induced voltage from the electric motor 53 or information output from a resolver or the like provided in the electric motor 53. As described above, when the ECU 80 controls the operation of the electric motor 53, the auxiliary steering torque can be imparted from the electric motor 53 to the pinion shaft 30, and force required to operate the steering wheel 20 can be reduced.

As illustrated in FIG. 1, the steering device 1 according to the embodiment is an electric power steering device of a single pinion type, in which assist force is imparted to the pinion shaft 30. The steering device 1 is not limited thereto. For example, the steering device 1 may be an electric power steering device of a column assist type or a dual pinion type. In the electric power steering device of a column assist type, assist force is imparted to the first steering shaft 21. In the electric power steering device of a dual pinion type, a second pinion gear (not illustrated) that meshes with the rack bar 40 at a position different from the position where the pinion gear 31 meshes with the rack bar 40 is provided, and assist force is imparted to the second pinion gear. Furthermore, the steering device 1 may be an electric power steering device of a rack assist type in which assist force is imparted to the rack bar 40 without a pinion gear, such as an electric power steering device of a ball screw type in which a ball screw imparts assist force to the rack bar 40.

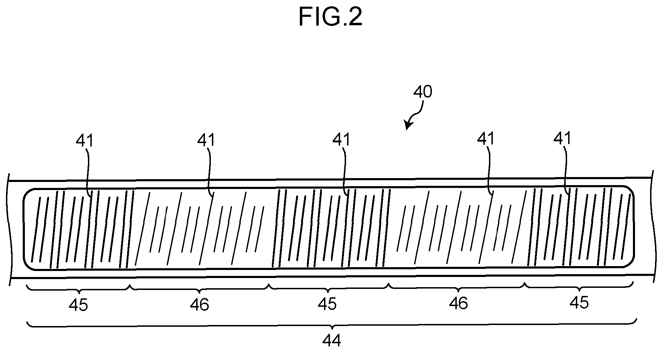

FIG. 2 is a front view of the rack teeth 41 of the rack bar 40 in FIG. 1. The rack teeth 41 of the rack bar 40 are arranged in the longitudinal direction of the rack bar 40. Furthermore, the rack teeth 41 have a helical shape. Each of the rack teeth 41 is inclined with respect to the longitudinal direction of the rack bar 40. As described above, the rack teeth 41 arranged in the rack bar 40 are arranged at a plurality of pitches of the rack teeth 41 in the longitudinal direction of the rack bar 40.

In detail, the rack teeth 41 have wide-pitch portions 46 and narrow-pitch portions 45. In the wide-pitch portion 46, the rack teeth 41 are arranged at a predetermined pitch. In the narrow-pitch portion 45, a pitch between the rack teeth 41 is narrower than the pitch between the rack teeth 41 located in the wide-pitch portion 46. That is to say, the pitch between the rack teeth 41 located in the wide-pitch portion 46 and the pitch between the rack teeth 41 located in the narrow-pitch portion 45 are relatively different from each other. The pitch between the rack teeth 41 located in the wide-pitch portion 46 is wider than the pitch between the rack teeth 41 located in the narrow-pitch portion 45.

In the embodiment, the narrow-pitch portions 45 are arranged at three locations of the center and both ends in the longitudinal direction of the rack bar 40 in a rack teeth arrangement region 44. In the rack teeth arrangement region 44, the rack teeth 41 are arranged in the longitudinal direction of the rack bar 40. The wide-pitch portions 46 are respectively arranged at two locations between the narrow-pitch portion 45 at the center and the narrow-pitch portions 45 at both ends of the rack teeth arrangement region 44. For example, the narrow-pitch portions 45 are arranged in a region of approximately ±10 mm centered on the center of the rack teeth arrangement region 44 in the longitudinal direction of the rack bar 40 and regions of approximately 10 mm from the respective ends of the rack teeth arrangement region 44. Transition regions may be provided at the boundaries between the narrow-pitch portions 45 and the wide-pitch portions 46. The transition region is a portion in which a pitch between rack teeth 41 gradually increases or gradually decreases. When the narrow-pitch portions 45 include these transition regions in each of which a pitch gradually increases or gradually decreases, the narrow-pitch portions 45 are arranged in a region of approximately ±25 mm centered on the center of the rack teeth arrangement region 44 and regions of approximately 25 mm from the respective ends of the rack teeth arrangement region 44.

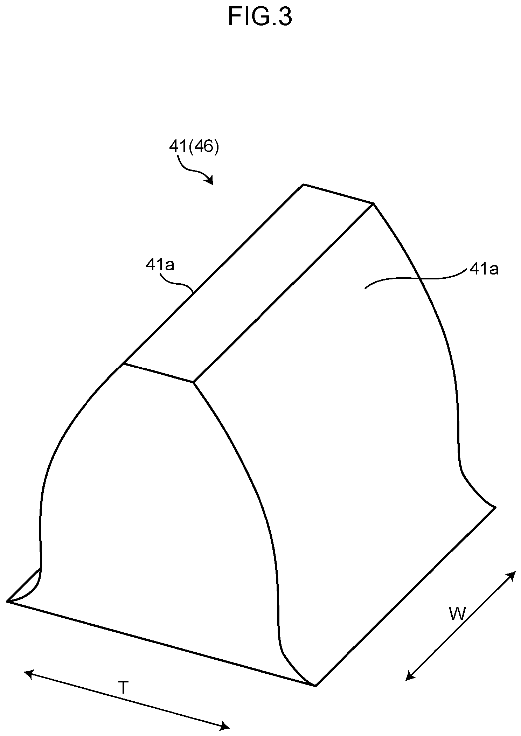

FIG. 3 is a detailed view of the rack tooth 41 arranged in the wide-pitch portion 46 in FIG. 2. The rack tooth 41 of the rack bar 40 has a tooth thickness decreasing from the proximal end side to the distal end side of the rack tooth 41 due to the thickness of the rack tooth 41. Furthermore, the rack tooth 41 located in the wide-pitch portion 46 has a constant tooth thickness in a tooth width direction W in which the rack tooth 41 extends. That is, the rack tooth 41 located in the wide-pitch portion 46 includes flat portions 41a on respective surfaces on both sides in a tooth thickness direction T. The flat portions 41a are substantially flat along the tooth width direction W. Thus, portions having the same height from the proximal end side in the rack teeth 41 located in the wide-pitch portions 46 have the same tooth thickness in the tooth thickness direction T at any position in the tooth width direction W.

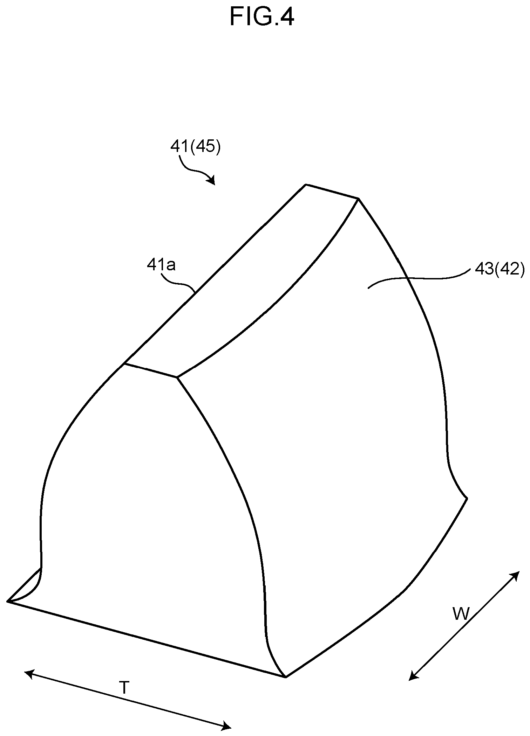

FIG. 4 is a detailed view of the rack tooth 41 arranged in the narrow-pitch portion 45 in FIG. 2. The rack tooth 41 located in the narrow-pitch portion 45 includes a tooth thickness changing portion 42 on one surface in the tooth thickness direction T. The tooth thickness changing portion 42 has tooth thicknesses at ends in the tooth width direction W smaller than the tooth thickness at the center in the tooth width direction W. In the embodiment, the tooth thickness changing portion 42 is provided with so-called crowning 43. In the crowning 43, the tooth thickness is maximized at the center in the tooth width direction W and is reduced toward the ends in the tooth width direction W. Thus, the rack tooth 41 located in the narrow-pitch portion 45 is curved in a direction in which one surface in the tooth thickness direction T has a tooth thickness reduced from the central position in the tooth width direction W toward both ends in the tooth width direction W.

In contrast, the tooth thickness changing portion 42 is not formed, that is to say, the crowning 43 is not provided on the surface opposite to the surface having the tooth thickness changing portion 42 in the rack tooth 41 located in the narrow-pitch portion 45. That is, in the rack tooth 41 located in the narrow-pitch portion 45, a surface where the crowning 43 is not provided corresponds to a flat portion 41a, which is substantially flat along the tooth width direction W. Thus, in the rack tooth 41 located in the narrow-pitch portion 45, the flat portion 41a opposite to the surface having the tooth thickness changing portion 42 is formed such that portions having the same height from the proximal end side extend linearly in the tooth width direction W.

The crowning 43 is provided on one surface in the tooth thickness direction T of each of the rack teeth 41 located in the narrow-pitch portions 45, and the one surface of each rack tooth 41 is on the same side in the longitudinal direction of the rack bar 40. That is to say, the crowning 43 is provided on surfaces of the rack teeth 41 in the narrow-pitch portion 45 at the center of the rack teeth arrangement region 44 and the rack teeth 41 in the narrow-pitch portions 45 at both ends of the rack teeth arrangement region 44, the surfaces being surfaces on the same side in the longitudinal direction of the rack bar 40.

Next, the function of the steering device 1 will be described. When the steering wheel 20 is operated during driving of the vehicle on which the steering device 1 is mounted, steering force imparted to the steering wheel 20 is transmitted from the steering wheel 20 to the first steering shaft 21. The steering force transmitted to the first steering shaft 21 is transmitted as steering torque from the first steering shaft 21 to the second steering shaft 22, and is transmitted from the second steering shaft 22 to the pinion shaft 30.

The pinion shaft 30 includes the pinion gear 31 that meshes with the rack teeth 41 of the rack bar 40. The steering torque transmitted to the pinion shaft 30 is transmitted to the rack bar 40 by the pinion gear 31 of the pinion shaft 30 and the rack teeth 41 of the rack bar 40. The rack bar 40 to which the steering torque has been transmitted from the pinion shaft 30 moves in the longitudinal direction of the rack bar 40, the longitudinal direction being a direction in which the plurality of rack teeth 41 are arranged. The rack bar 40 converts the steering torque transmitted from the pinion shaft 30 into linear motion in the longitudinal direction of the rack bar 40 as described above. That is to say, the rack bar 40 moves in the vehicle width direction of the vehicle, which is the longitudinal direction of the rack bar 40 arranged in the vehicle.

Since the tie rods 60 are coupled to both ends of the rack bar 40, the tie rods 60 coupled to the rack bar 40 also operate as the rack bar 40 moves in the vehicle width direction. Since the tie rods 60 are coupled to the wheels 65, the operations of the tie rods 60 change the orientations of the wheels 65. This causes the traveling direction of the vehicle on which the steering device 1 is mounted to change in accordance with an operation of the steering wheel 20.

Furthermore, the steering device 1 according to the embodiment includes the electric motor 53 that generates auxiliary steering torque for assisting the steering by the driver. The electric motor 53 generates the auxiliary steering torque based on steering torque detected by a torque sensor (not illustrated). That is, the steering torque detected by the torque sensor is transmitted to the ECU 80 as an electric signal. The ECU 80 activates the electric motor 53 based on the electric signal transmitted from the torque sensor to generate the auxiliary steering torque in the electric motor 53. The auxiliary steering torque generated in the electric motor 53 is transmitted to the pinion shaft 30 via the worm gear reducer 50.

That is, the auxiliary steering torque generated in the electric motor 53 is transmitted from the worm shaft 52, which is attached to the output shaft of the electric motor 53, to the worm wheel 51, which is attached to the pinion shaft 30 and meshes with the worm shaft 52, and then to the pinion shaft 30 via the worm wheel 51. This causes the electric motor 53 to assist the rotation of the pinion shaft 30 by the auxiliary steering torque generated in the electric motor 53. The pinion shaft 30 is rotated by steering torque. Therefore, steering force imparted by the driver to the steering wheel 20 is assisted by the auxiliary steering torque generated in the electric motor 53. Force required to operate the steering wheel 20 is reduced by transmitting the auxiliary steering torque generated in the electric motor 53 to the pinion shaft 30.

Furthermore, the rack teeth 41 of the rack bar 40 includes the narrow-pitch portions 45 and the wide-pitch portions 46. The narrow-pitch portions 45 are located at the center and both ends of the rack teeth arrangement region 44. That is, the narrow-pitch portions 45 are located at or near the center in a rotation range of the steering wheel 20 that rotates the pinion gear 31 that meshes with the rack teeth 41 and at or near both ends in the rotation range. Thus, the rack teeth 41 located in the narrow-pitch portions 45 mesh with the pinion gear 31 when the vehicle is in or near straight-line traveling and when the steering angle is at or near the maximum in vehicle traveling.

In the straight-line traveling during vehicle traveling, the steering wheel 20 is slightly rotated depending on the direction of the road, the condition of the road surface, and the like, and is slightly rotated during changing lanes, without being greatly rotated. In or near such straight-line traveling, the pinion gear 31 meshes with the rack teeth 41 of the narrow-pitch portions 45, thereby reducing the amount of movement in the longitudinal direction of the rack bar 40 with respect to the rotation of the steering wheel 20, that is, the rotation of the pinion gear 31. Thus, the amount of change in the orientations of the wheels 65 with respect to the rotation of the steering wheel 20 is reduced in or near straight-line traveling, which facilitates fine steering adjustment and ensures steering feel in or near straight-line traveling.

Furthermore, when the steering angle is at or near the maximum in vehicle traveling, the orientations of the wheels 65 are greatly changed from the orientations in straight-line traveling. When the vehicle travels in this state, large force in a direction in which the orientations of the wheels 65 are returned to the orientations in straight-line traveling acts from a road surface to the wheels 65 to be steered. The large force in a direction in which the orientations of the wheels 65 are returned to the orientations in straight-line traveling is transmitted from the wheels 65 to the rack bar 40 via the tie rods 60, and then transmitted from the rack teeth 41 to the pinion gear 31.

Thus, although large force acts between the rack teeth 41 and the pinion gear 31 when the steering angle is at or near the maximum in vehicle traveling, rack teeth 41 in the rack bar 40 that mesh with the pinion gear 31 when the steering angle is at or near the maximum are located in the narrow-pitch portions 45. As described above, the rack teeth 41 located in the narrow-pitch portions 45 and the pinion gear 31 mesh with each other when the steering angle is at or near the maximum, so that the number of the rack teeth 41 that simultaneously come into contact with the pinion gear 31 is increased as compared with that in a case where the rack teeth 41 located in the wide-pitch portions 46 mesh with the pinion gear 31.

With this configuration, at or near the maximum steering angle, a larger number of rack teeth 41 can receive large force that acts between the rack teeth 41 and the pinion gear 31 than in the case where the rack teeth 41 located in the wide-pitch portions 46 and the pinion gear 31 mesh with each other. Therefore, stress of the rack teeth 41 at or near the maximum steering angle, where large force acts between the rack teeth 41 and the pinion gear 31, can be reduced, and durability can be ensured.

Furthermore, the pinion gear 31 meshes with the rack teeth 41 located in the wide-pitch portions 46 at a steering angle between the steering angle in the straight-line traveling and the maximum steering angle in vehicle traveling. The pitch between the rack teeth 41 in the wide-pitch portions 46 is wider than the pitch between the rack teeth 41 in the narrow-pitch portions 45. Therefore, the amount of movement in the longitudinal direction of the rack bar 40 with respect to the rotation of the steering wheel 20, that is, the rotation of the pinion gear 31, is increased as compared with a state in which the pinion gear 31 meshes with the rack teeth 41 located in the narrow-pitch portions 45. Thus, the amount of change in the orientations of the wheels 65 with respect to the rotation of the steering wheel 20 is increased at the steering angle between the steering angle in the straight-line traveling and the maximum steering angle in vehicle traveling. Consequently, responsiveness to steering can be enhanced, and steering feel can be ensured in steering at a steering angle larger than that in straight-line traveling.

Furthermore, when the rack teeth 41 located in the wide-pitch portions 46 mesh with the pinion gear 31, the number of the rack teeth 41 that simultaneously come into contact with the pinion gear 31 is reduced as compared with when the rack teeth 41 located in the narrow-pitch portions 45 mesh with the pinion gear 31. When the steering angle is smaller than a value near the maximum, force that acts between the rack teeth 41 and the pinion gear 31 is reduced as compared with when the steering angle is at or near the maximum. Thus, at the steering angle smaller than a value near the maximum steering angle, the stress of the rack teeth 41 is not easily increased even when a small number of the rack teeth 41 simultaneously come into contact with the pinion gear 31, and durability is ensured.

Furthermore, in the embodiment, the rack teeth 41 located in the wide-pitch portions 46 are provided with no crowning 43, whereas the rack teeth 41 located in the narrow-pitch portions 45 are each provided with crowning 43 on one surface in the tooth thickness direction T. Thus, in the state in which the pinion gear 31 and the rack teeth 41 mesh with each other, the number of the rack teeth 41 that simultaneously come into contact with the pinion gear 31 can be equalized as much as possible over the entire rack teeth arrangement region 44. That is to say, when the pinion gear 31 and the rack teeth 41 mesh with each other, the difference between the maximum number and the minimum number of the rack teeth 41 that simultaneously come into contact with the pinion gear 31 can be reduced as much as possible.

That is, the pinion gear 31 includes the helical gear 31a (see FIG. 8), and the rack teeth 41 also have a helical shape. When coming into contact with each other, the gear 31a of the pinion gear 31 and the rack teeth 41 gradually come into contact with each other from a position at or near an end in a direction in which the gear 31a and the rack teeth 41 are formed. For example, the rack teeth 41 gradually come into contact with the gear 31a of the pinion gear 31 from the position at or near the ends in the tooth width direction W. The contact position changes in the tooth width direction W with the rotation of the pinion gear 31.

Furthermore, the pitch between the rack teeth 41 located in the narrow-pitch portions 45 is narrower than the pitch between the rack teeth 41 located in the wide-pitch portions 46. Thus, when the gear 31a of the pinion gear 31 comes into contact with the rack teeth 41 due to the rotation of the pinion gear 31, the gear 31a comes into contact with the rack teeth 41 more easily in a case where the pinion gear 31 is located in the narrow-pitch portion 45 than in a case where the pinion gear 31 is located in the wide-pitch portion 46.

The crowning 43 is provided on one surface in the tooth thickness direction T of each of the rack teeth 41 located in the narrow-pitch portions 45. The pinion gear 31 is thus less likely to come into contact with the vicinities of the ends in the tooth width direction W on the one surface where the crowning 43 is provided, of the rack tooth 41 located in the narrow-pitch portion 45. Furthermore, when the pinion gear 31, which is in contact with the surfaces of the rack teeth 41 in the narrow-pitch portion 45 provided with the crowning 43, separates from the rack teeth 41 as the pinion gear 31 rotates, it separates easily from the vicinities of the ends in the tooth width direction W.

Thus, the rack teeth 41 located in the narrow-pitch portions 45 causes the ease of contact with the pinion gear 31 due to the narrow pitch and the difficulty of contact with the pinion gear 31 in the vicinity of each end in the tooth width direction W on the surface of the rack teeth 41 provided with the crowning 43 to offset each other. Thus, in the rack teeth 41 arranged in the rack bar 40, the difference between the ease with which the rack teeth 41 in the narrow-pitch portions 45 contact the rotating pinion gear 31 and the ease with which the rack teeth 41 in the wide-pitch portions 46 contact the rotating pinion gear 31 is reduced.

Therefore, in the embodiment, when the rotating pinion gear 31 and the rack teeth 41 mesh with each other, the difference between the maximum number and the minimum number of the rack teeth 41 that simultaneously come into contact with the pinion gear 31 is reduced in the entire rack teeth arrangement region 44.

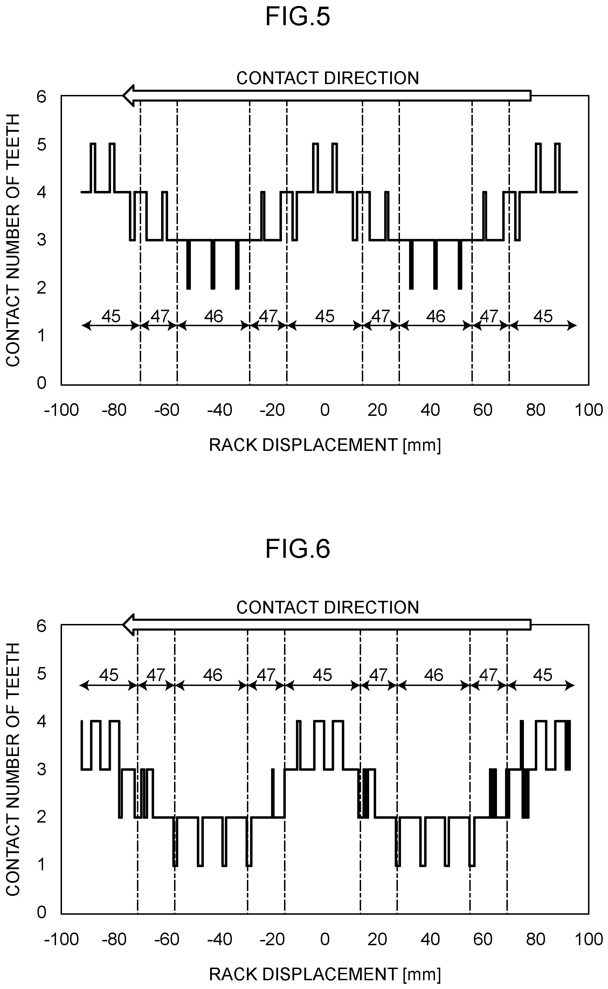

Next, the transition of the number of the rack teeth 41 of the rack bar 40 that simultaneously come into contact with the pinion gear 31 when the pinion gear 31 is in a rotating state will be described. FIG. 5 is an explanatory diagram illustrating the transition of the number of the rack teeth 41 of the rack bar 40 that simultaneously come into contact with the rotating pinion gear 31 when each of the rack teeth 41 is provided with no crowning 43. FIG. 5 is an explanatory diagram illustrating an example of the transition of the number of the rack teeth 41 that simultaneously come into contact with the pinion gear 31 in a case where the contact portion between the pinion gear 31 and the rack teeth 41 of the rack bar 40 provided with no crowning 43 moves from one end side to the other end side of the rack teeth arrangement region 44. FIG. 5 and FIGS. 6 and 7 to be described later are explanatory diagrams in which transition regions 47 are provided between the narrow-pitch portions 45 and the wide-pitch portions 46 of the rack bar 40. In the transition regions 47, the pitch of the rack teeth 41 changes therebetween.

FIG. 5 illustrates an example in which, when the rack teeth 41 located in the narrow-pitch portion 45 and the pinion gear 31 come into contact with each other, the number of the rack teeth 41 that simultaneously come into contact with the pinion gear 31 varies between three and five by rotating the pinion gear 31. In contrast, when the rack teeth 41 located in the wide-pitch portion 46 and the pinion gear 31 come into contact with each other, the number of the rack teeth 41 that simultaneously come into contact with the pinion gear 31 varies between two and three by rotating the pinion gear 31. Furthermore, when the rack teeth 41 located in the transition region 47 and the pinion gear 31 come into contact with each other, the number of the rack teeth 41 that simultaneously come into contact with the pinion gear 31 varies between three and four by rotating the pinion gear 31. Thus, in the example of FIG. 5, the number of the rack teeth 41 that simultaneously come into contact with the pinion gear 31 varies between two and five depending on the position where the pinion gear 31 and the rack teeth 41 come into contact with each other.

FIG. 6 is an explanatory diagram illustrating the transition of the number of the rack teeth 41 of the rack bar 40 that simultaneously come into contact with the rotating pinion gear 31 when each of the rack teeth 41 is provided with the crowning 43 on both surfaces thereof. FIG. 6 is an explanatory diagram illustrating an example of the transition of the number of the rack teeth 41 that simultaneously come into contact with the pinion gear 31 in a case where the contact portion between the pinion gear 31 and the rack teeth 41 of the rack bar 40 provided with the crowning 43 on both surfaces thereof moves from one end side to the other end side of the rack teeth arrangement region 44.

FIG. 6 illustrates an example in which, when the rack teeth 41 located in the narrow-pitch portion 45 and the pinion gear 31 come into contact with each other, the number of the rack teeth 41 that simultaneously come into contact with the pinion gear 31 varies between two and four by rotating the pinion gear 31. In contrast, when the rack teeth 41 located in the wide-pitch portion 46 and the pinion gear 31 come into contact with each other, the number of the rack teeth 41 that simultaneously come into contact with the pinion gear 31 varies between one and two by rotating the pinion gear 31. Furthermore, when the rack teeth 41 located in the transition region 47 and the pinion gear 31 come into contact with each other, the number of the rack teeth 41 that simultaneously come into contact with the pinion gear 31 varies between one and three by rotating the pinion gear 31. Thus, in the example of FIG. 6, the number of the rack teeth 41 that simultaneously come into contact with the pinion gear 31 varies between one and four depending on the position where the pinion gear 31 and the rack teeth 41 come into contact with each other.

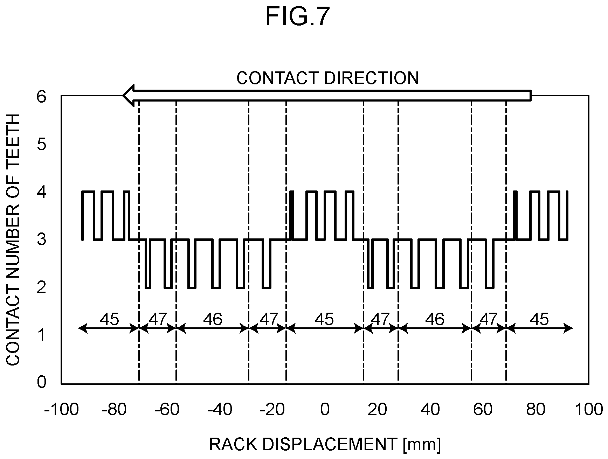

FIG. 7 is an explanatory diagram illustrating the transition of the number of the rack teeth 41 of the rack bar 40, located in the narrow-pitch portions 45, that simultaneously come into contact with the pinion gear 31 when each of the rack teeth 41 is provided with the crowning 43 on one surface thereof. FIG. 7 is an explanatory diagram illustrating an example of the transition of the number of the rack teeth 41 that simultaneously come into contact with the pinion gear 31 in a case where the contact portion between the pinion gear 31 and the rack teeth 41 located in the narrow-pitch portion 45 of the rack bar 40 each of which is provided with the crowning 43 on one surface thereof moves from one end side to the other end side of the rack teeth arrangement region 44.

FIG. 7 illustrates an example in which, when the rack teeth 41 located in the narrow-pitch portion 45 and the pinion gear 31 come into contact with each other, the number of the rack teeth 41 that simultaneously come into contact with the pinion gear 31 varies between three and four by rotating the pinion gear 31. In contrast, when the rack teeth 41 located in the wide-pitch portion 46 and the pinion gear 31 come into contact with each other, the number of the rack teeth 41 that simultaneously come into contact with the pinion gear 31 varies between two and three by rotating the pinion gear 31. Furthermore, when the rack teeth 41 located in the transition region 47 and the pinion gear 31 come into contact with each other, the number of the rack teeth 41 that simultaneously come into contact with the pinion gear 31 varies between two and three by rotating the pinion gear 31. Thus, in the example of FIG. 7, the number of the rack teeth 41 that simultaneously come into contact with the pinion gear 31 varies between two and four depending on the position where the pinion gear 31 and the rack teeth 41 come into contact with each other.

As is clear from the examples of FIGS. 5, 6, and 7, when the crowning 43 is provided on one surface of each of the rack teeth 41 located in the narrow-pitch portions 45, the difference between the maximum number and the minimum number of the rack teeth 41 that simultaneously come into contact with the pinion gear 31 is reduced as compared with that when no crowning 43 is provided on the rack teeth 41 and when the crowning 43 is provided on both surfaces of the rack teeth 41. Thus, when the crowning 43 is provided on one surface of each of the rack teeth 41 located in the narrow-pitch portions 45, a variation in steering resistance during steering can be reduced as compared with when no crowning 43 is provided on the rack teeth 41 and when the crowning 43 is provided on both surfaces of the rack teeth 41.

Furthermore, as is clear from the examples of FIGS. 5 and 7, when the crowning 43 is provided on one surface of each of the rack teeth 41 located in the narrow-pitch portions 45, the maximum number of the rack teeth 41 that simultaneously come into contact with the pinion gear 31 is reduced as compared with when no crowning 43 is provided to the rack teeth 41. Thus, when the crowning 43 is provided on one surface of each of the rack teeth 41 located in the narrow-pitch portions 45, the steering resistance during steering can be reduced as compared with when no crowning 43 is provided on the rack teeth 41.

As described above, in the steering device 1 according to the embodiment, the rack teeth 41 of the rack bar 40 include the wide-pitch portion 46 and the narrow-pitch portion 45. The rack tooth 41 located in the narrow-pitch portion 45 includes the tooth thickness changing portion 42 on one surface in the tooth thickness direction T. The tooth thickness changing portion 42 has tooth thicknesses at ends in the tooth width direction W smaller than the tooth thickness at the center in the tooth width direction W. With this configuration, when the rotating pinion gear 31 comes into contact with the rack teeth 41 located in the narrow-pitch portion 45, the contact can be made difficult in the vicinity of each end in the tooth width direction W of the rack teeth 41. Thus, the rack teeth 41 located in the narrow-pitch portion 45 can cause the ease of contact with the pinion gear 31 due to the narrow pitch and the difficulty of contact with the pinion gear 31 in the vicinity of each end in the tooth width direction W of the rack teeth 41 to offset each other. Therefore, the difference between the maximum number and the minimum number of the rack teeth 41 that simultaneously come into contact with the pinion gear 31 can be reduced in the entire rack teeth arrangement region 44. The variation in steering resistance during steering can be reduced without changing the sliding resistance between the rack bar 40 and a rack bush (not illustrated) by partially reducing the diameter of the rack bar 40 as in Patent Literature 1. As a result, variation in steering resistance during steering can be reduced without decreasing the rigidity of the rack bar 40.

Furthermore, the tooth thickness changing portion 42 of the rack tooth 41 located in the narrow-pitch portion 45 is provided with the crowning 43 having a tooth thickness decreasing from the center toward the ends in the tooth width direction W of the rack tooth 41. With this configuration, when the rotating pinion gear 31 comes into contact with the rack tooth 41 located in the narrow-pitch portion 45, the contact can be made difficult in the vicinity of each end in the tooth width direction W. Thus, the rack teeth 41 located in the narrow-pitch portion 45 can cause the ease of contact with the pinion gear 31 due to the narrow pitch and the difficulty of contact with the pinion gear 31 in the vicinity of each end in the tooth width direction W of the rack teeth 41 due to the crowning 43 to offset each other. Therefore, the difference between the maximum number and the minimum number of the rack teeth 41 that simultaneously come into contact with the pinion gear 31 can be reduced, and variation in steering resistance during steering can be reduced. As a result, variation in steering resistance during steering can be reduced without decreasing the rigidity of the rack bar 40.

Furthermore, the narrow-pitch portions 45 are arranged at the center and both ends of the rack teeth arrangement region 44. Thus, steering feel in or near the straight-line traveling is ensured by the narrow-pitch portion 45 at the center, and the stress of the rack teeth 41 when the steering angle is at or near the maximum is reduced in the narrow-pitch portions 45 at both ends, which can ensure durability. Furthermore, the wide-pitch portions 46 are arranged between the narrow-pitch portions 45 at the center and both ends in the longitudinal direction of the rack bar 40. Thus, responsiveness to steering at a steering angle between the steering angle in the straight-line traveling and the maximum steering angle can be enhanced in the wide-pitch portions 46, and steering feel can be ensured during steering at a steering angle larger than that in straight-line traveling. As a result, both the steering feel during vehicle traveling and the durability of the rack bar 40 can be improved.

Furthermore, the number of the rack teeth 41 that simultaneously come into contact with the pinion gear 31 falls within a range of two to four. Thus, impact noise can be reduced while reducing variation in steering resistance during steering. Moreover, the steering feel can be improved. That is, two or more rack teeth 41 simultaneously come into contact with the pinion gear 31, which can reduce impact noise and improve the steering feel.

FIG. 8 is an explanatory diagram illustrating a state in which two rack teeth 41 are in contact with the gear 31a of the pinion gear 31. As illustrated in FIG. 8, when the two rack teeth 41 simultaneously come into contact with the pinion gear 31, the two rack teeth 41 come into contact with one gear 31a of the pinion gear 31 from both sides in the tooth thickness direction of the one gear 31a. Thus, while the gear 31a of the rotating pinion gear 31 is located on the rack bar 40 side, the rack teeth 41 can continue to be in contact with both surfaces of the gear 31a, which reduces impact noise generated when the gear 31a of the pinion gear 31 and the rack teeth 41 separated from each other come into contact with each other. Furthermore, the contact between the pinion gear 31 and the two rack teeth 41 from both surfaces of the gear 31a of the pinion gear 31 can reduce the play between the pinion gear 31 and the rack bar 40, and improve the steering feel during steering.

Furthermore, the number of the rack teeth 41 that simultaneously come into contact with the pinion gear 31 is four or fewer, which can reduce the difference between the maximum number and the minimum number of the rack teeth 41 that simultaneously come into contact with the pinion gear 31 and can reduce variation in steering resistance during steering. As a result, impact noise can be reduced while reducing variation in steering resistance during steering, and the steering feel can be improved.

### (Modifications)

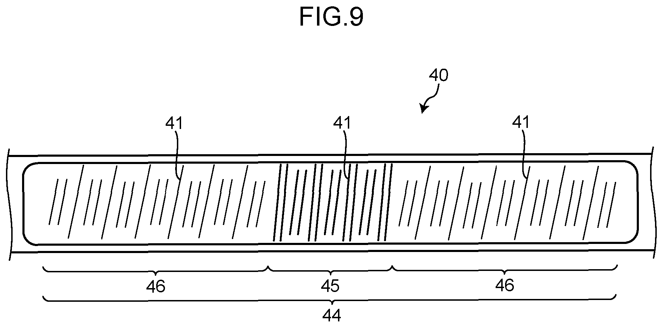

Although the narrow-pitch portions 45 are arranged at the center and both ends of the rack teeth arrangement region 44 in the above-described embodiment, the narrow-pitch portions 45 may be arranged at other positions. FIG. 9 is a schematic view illustrating a modification of the steering device 1 according to the embodiment, in which the narrow-pitch portion 45 is arranged at the center in the rack teeth arrangement region 44. For example, as illustrated in FIG. 9, the narrow-pitch portion 45 may be arranged at the center in the rack teeth arrangement region 44 and need not be arranged at both ends of the rack teeth arrangement region 44. In this case, wide-pitch portions 46 are arranged in the entire regions at both sides of the narrow-pitch portion 45 in the rack teeth arrangement region 44.

When a vehicle provided with the steering device 1 is relatively small in size and weight and thus a load put on the rack teeth 41 during steering is small, for example, force that acts between the pinion gear 31 and the rack teeth 41 is less likely to be increased even when the steering angle is at or near the maximum. In such a case, the stress of the rack teeth 41 is less likely to be increased even when the steering angle is at or near the maximum. Therefore, the wide-pitch portions 46 may be arranged at both ends of the rack teeth arrangement region 44 without arranging the narrow-pitch portions 45. As described above, in a case where a load put on the rack teeth 41 is small even when the steering angle is at or near the maximum, the wide-pitch portions 46 are arranged at or near both ends of the rack teeth arrangement region 44. Thereby, responsiveness during steering at a large steering angle can be enhanced, and the steering feel can be improved.

Furthermore, although the rack tooth 41 located in the narrow-pitch portion 45 includes the tooth thickness changing portion 42 on one surface in the tooth thickness direction T and the rack tooth 41 located in the wide-pitch portion 46 includes no tooth thickness changing portion 42 in the above-described embodiment, the rack tooth 41 located in the narrow-pitch portion 45 and the rack tooth 41 located in the wide-pitch portion 46 may be formed in other forms.

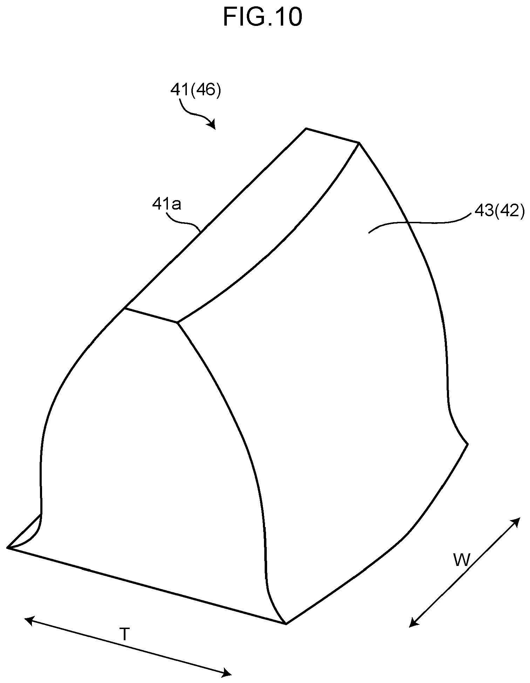

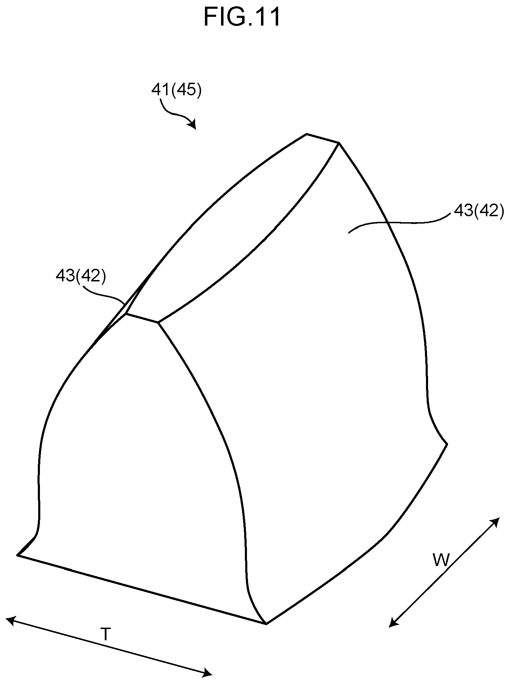

FIG. 10 is an explanatory diagram illustrating a modification of the steering device 1 according to the embodiment, in which the tooth thickness changing portion 42 is formed on one surface of the rack tooth 41 arranged in the wide-pitch portion 46. FIG. 11 is an explanatory diagram illustrating a modification of the steering device 1 according to the embodiment, in which the tooth thickness changing portions 42 are respectively formed on both surfaces of the rack tooth 41 arranged in the narrow-pitch portion 45. For example, as illustrated in FIG. 10, the rack tooth 41 located in the wide-pitch portion 46 may have the tooth thickness changing portion 42 on one surface in the tooth thickness direction T, and may have a flat portion 41a on the other surface. For example, as illustrated in FIG. 11, the rack tooth 41 located in the narrow-pitch portion 45 may have the tooth thickness changing portions 42 on respective surfaces on both sides in the tooth thickness direction T. That is, the rack tooth 41 located in the wide-pitch portion 46 may be provided with crowning 43 as the tooth thickness changing portion 42 on one surface in the tooth thickness direction T. The rack tooth 41 located in the narrow-pitch portion 45 may be provided with crowning 43 as the tooth thickness changing portions 42 on both surfaces in the tooth thickness direction T.

As described above, the tooth thickness changing portion 42 is formed on one surface of the rack tooth 41 located in the wide-pitch portion 46, and the tooth thickness changing portions 42 are formed on both surfaces of the rack tooth 41 located in the narrow-pitch portion 45, which can reduce the difference between the maximum number and the minimum number of the rack teeth 41 that simultaneously come into contact with the pinion gear 31.

That is, the rack teeth 41 located in the narrow-pitch portions 45 cause the ease of contact with the pinion gear 31 due to the narrower pitch than that in the wide-pitch portions 46 and the difficulty of contact with the pinion gear 31 due to the fact that the rack teeth 41 located in the narrow-pitch portions 45 have a larger number of surfaces provided with the tooth thickness changing portions 42 than the rack teeth 41 located in the wide-pitch portions 46 to offset each other. In other words, the rack teeth 41 located in the wide-pitch portions 46 cause the difficulty of contact with the pinion gear 31 due to a pitch wider than that in the narrow-pitch portions 45 and the ease of contact with the pinion gear 31 due to the fact that the rack teeth 41 located in the wide-pitch portions 46 have a smaller number of surfaces provided with the tooth thickness changing portions 42 than the rack teeth 41 located in the narrow-pitch portions 45 to offset each other.

Thus, the difference between the maximum number and the minimum number of the rack teeth 41 that simultaneously come into contact with the pinion gear 31 can be reduced in the entire rack teeth arrangement region 44, and variation in steering resistance during steering can be reduced. As a result, variation in steering resistance during steering can be reduced without decreasing the rigidity of the rack bar 40.

Furthermore, although the tooth thickness changing portion 42 of the rack tooth 41 is provided with the crowning 43 in the above-described embodiment, the tooth thickness changing portion 42 may be provided with a modification other than the crowning 43. For example, the tooth thickness changing portion 42 may be provided with so-called end relief in which a rack tooth 41 has a constant tooth thickness at or near the center in the tooth width direction W and has tooth thicknesses at respective ends in the tooth width direction W smaller than the tooth thickness at the center in the tooth width direction W. The form of the tooth thickness changing portion 42 is not limited as long as the rack tooth 41 has a tooth thickness at the ends in the tooth width direction W smaller than the tooth thickness at the center in the tooth width direction W.

Although the preferred embodiment of the present disclosure has been described above, the present disclosure is not limited to those described above in the embodiment. Configurations described as the embodiment and the variation may be appropriately combined.

### Reference Signs List

- 1: STEERING DEVICE
- 10: RACK HOUSING
- 11: PINION HOUSING
- 12: GEAR REDUCER HOUSING
- 20: STEERING WHEEL
- 21: FIRST STEERING SHAFT
- 22: SECOND STEERING SHAFT
- 24: FIRST BEARING
- 25: SECOND BEARING
- 26: FIRST UNIVERSAL JOINT
- 27: SECOND UNIVERSAL JOINT
- 30: PINION SHAFT
- 31: PINION GEAR
- 31a: GEAR
- 32: CYLINDRICAL SURFACE
- 40: RACK BAR
- 41: RACK TOOTH
- 41a: FLAT PORTION
- 42: TOOTH THICKNESS CHANGING PORTION
- 43: CROWNING
- 44: RACK TEETH ARRANGEMENT RANGE
- 45: NARROW-PITCH PORTION
- 46: WIDE-PITCH PORTION
- 47: TRANSITION REGION
- 50: WORM GEAR REDUCER
- 51: WORM WHEEL
- 52: WORM SHAFT
- 53: ELECTRIC MOTOR
- 60: TIE ROD
- 65: WHEEL
- 80: ECU
- 85: POWER SUPPLY DEVICE

## Claims

1. A steering device comprising:
a pinion gear including a helical gear; and
a rack bar including a plurality of rack teeth having a helical shape, which mesh with the pinion gear,
wherein the rack teeth include: a wide-pitch portion in which a plurality of the rack teeth are arranged at a predetermined pitch; and a narrow-pitch portion in which a pitch between a plurality of the rack teeth is narrower than the pitch between the rack teeth located in the wide-pitch portion,
each of the rack teeth located in the wide-pitch portion has a constant tooth thickness in a tooth width direction, and
each of the rack teeth located in the narrow-pitch portion includes, on one surface in a tooth thickness direction, a tooth thickness changing portion in which a tooth thickness of an end in the tooth width direction is smaller than a tooth thickness at a center in the tooth width direction.

2. A steering device comprising:
a pinion gear including a helical gear; and
a rack bar including a plurality of rack teeth having a helical shape, which mesh with the pinion gear,
wherein the rack teeth include: a wide-pitch portion in which a plurality of the rack teeth are arranged at a predetermined pitch; and a narrow-pitch portion in which a pitch between a plurality of the rack teeth is narrower than the pitch between the rack teeth located in the wide-pitch portion,
each of the rack teeth located in the wide-pitch portion includes, on one surface in a tooth thickness direction, a tooth thickness changing portion in which a tooth thickness of an end in the tooth width direction is smaller than a tooth thickness at a center in the tooth width direction, and
each of the rack teeth located in the narrow-pitch portion includes, on respective surfaces on both sides in the tooth thickness direction, the tooth thickness changing portion.

3. The steering device according to claim 1 or 2, wherein the tooth thickness changing portion is provided with crowning in which a tooth thickness is maximized at the center in the tooth width direction and is reduced toward the end in the tooth width direction.

4. The steering device according to any one of claims 1 to 3,
wherein the narrow-pitch portions are respectively arranged at a center and both ends of a region in which the rack teeth are arranged in a longitudinal direction of the rack bar, and
the wide-pitch portions are respectively arranged between the narrow-pitch portion at the center and the narrow-pitch portions at both ends in the longitudinal direction of the rack bar.

5. The steering device according to any one of claims 1 to 3,
wherein the narrow-pitch portion is arranged at a center in a region in which a plurality of the rack teeth are arranged in a longitudinal direction of the rack bar, and
the wide-pitch portions are arranged at both sides of the narrow-pitch portion in the longitudinal direction of the rack bar.

6. The steering device according to any one of claims 1 to 5, wherein the number of the rack teeth that simultaneously come into contact with the pinion gear falls within a range of two to four.
